# EUROPÄISCHE PATENTSCHRIFT

(11) **EP 0 365 975 B1**
(45) Veröffentlichungstag und Bekanntmachung des Hinweises auf die Patenterteilung: **30.11.1994**
(21) Anmeldenummer: 89119235.3
(22) Anmeldetag: 17.10.1989
(51) Int. Cl.: B60N 2/06

(54) **Sitzschiene für Fahrzeugsitze, insbesondere Kraftfahrzeugsitze**
Seat slide for a vehicle seat, particularly for a motor vehicle seat
Glissière pour sièges de véhicules, en particulier sièges de véhicules automobiles

(30) Priorität: 25.10.1988 DE 3836248
(43) Veröffentlichungstag der Anmeldung: 02.05.1990
(73) Patentinhaber: KEIPER RECARO GmbH & Co., D-42824 Remscheid (DE)
(72) Erfinder: Münchow, Andrea, D-5630 Remscheid (DE); Thiel, Peter, D-5630 Remscheid (DE)
(74) Vertreter: Buse, Karl Georg, Dipl.-Phys.

(56) Entgegenhaltungen:
- EP-A- 0 197 638
- DE-A- 3 221 959
- DE-A- 3 829 746
- FR-A- 2 606 338
- GB-A- 2 110 927
- PATENT ABSTRACTS OF JAPAN, Band 11, Nr. 158 (M-591)[2605], 22. Mai 1987;& JP-A-61 291 234

## Beschreibung

Die Erfindung betrifft eine Sitzschiene für Fahrzeugsitze, insbesondere Kraftfahrzeugsitze, die aus einer Führungsschiene und einer daran verschiebbaren Laufschiene besteht, wobei die Laufschiene zwei auf Distanz zueinander angeordnete, gehäuseartig vereinigte, an der Führungsschiene gleitend abgestützte Seitenteile aufweist.

Aus der DE-C-3 221 959 ist eine Sitzschiene der eingangs genannten Art bekannt, bei der die Seitenteile als Halbschalen ausgebildet sind, die in ihrem oberen Bereich einen flanschartigen Rand aufweisen, der zur Bildung einer gehäuseartigen Laufschiene die beiden Halbschalen durch beispielsweise Punktschweißung miteinander verbindet. Diese aus Stahlblechteilen geformten Halbschalen sollen insbesondere dann Verwendung finden, wenn die Sitzschiene eine relativ komplizierte, mit Walzenstahl-Profilschienen nicht realisierbare Geometrie hat. Im Crashfall sind von derartigen Laufschienen umfassenden Sitzschienen relativ hohe Belastungen aufzunehmen, weshalb aus Stabilitätsgründen die Halbschalen eine bestimmte Stärke aufweisen müssen. Das Gewicht solcher aus Stahl gefertigter Sitzschienen läßt sich kaum mehr vermindern, wenngleich die Bearbeitung und Herstellung solcher aus Stahlblech bestehender Sitzschienen unproblematisch ist.

Die Aufgabe der vorliegenden Erfindung besteht darin, eine Sitzschiene der vorgenannten Art derart zu verbessern, daß bei den Festigkeitsanforderungen genügendem Bauteilverbund eine wesentliche Reduzierung des Sitzschienengewichtes möglich ist. Diese Aufgabe ist erfindungsgemäß dadurch gelöst, daß die Seitenteile durch ihre Distanz voneinander überbrückende Lamellen auf Abstand gehalten und von an ihnen festgelegten Stehbolzen miteinander verbunden sind. Die Verwendung von distanzüberbrückenden Lamellen zwischen den Seitenteilen und die Lamellen mit den Seitenteilen verklemmenden Stehbolzen gestatten die Verwendung von Leichtmetallen für Seitenteile und Lamellen, da die Stehbolzen an den Seitenteilen zur einfachen Verbindung zwischen Lamellen und Seitenteilen vernietet werden können. Dadurch ist eine wesentliche Gewichtsreduzierung der Sitzschienen möglich.

Um einen sicheren Verbund von Lamellen und Seitenteilen zu ermöglichen, weisen die Lamellen vorteilhaft an ihren Breitseiten abstandsweise hintereinander Vorsprünge auf, die in Ausnehmungen der Seitenteile justierend eingreifen. Dabei sind die vorteilhaft einen rechteckförmigen Querschnitt aufweisenden Vorsprünge von Randausnehmungen der Lamellen gebildet, die an den Innenseiten der Seitenteile anliegen, während die Vorsprünge in rechteckförmige, im Abstand der Vorsprünge in den Seitenteilen angeordnete Ausnehmungen schließend eingreifen. Dabei wird eine stabile Laufschiene insbesondere dadurch erzielt, daß die Seitenteile mittels die Lamellen gegen die Innenseiten der Seitenteile andrückende Stehbolzen einen bereichsweise kastenartigen Querschnitt der Laufschiene bildend miteinander fest verbunden sind.

Die Verwendung des Werkstoffes Leichtmetall für die Seitenteile und Lamellen der Laufschiene ermöglicht,
Seitenteile als Strangpreßprofile auszubilden, die zur leichtgängigen Verschiebung zwischen Laufschiene und Führungsschiene vorteilhaft mit unterseitiger, Kugellaufbahnen aufweisender Abwinklung versehen sind. Dabei sind den Kugellaufbahnen der Seitenteile der Laufschiene Kugellaufbahnen der Führungsschiene zugeordnet, die ebenfalls als Strangpreßprofil mit C-förmigem Querschnitt ausgebildet sein kann.

Damit bei einem eventuell auftretenden Crashfall verhindert wird, daß sich die Seitenteile der Laufschiene durch erhöhten Kraftangriff aus den Kugellaufbahnen herausziehen lassen, ist nach einem weiteren Ausgestaltungsmerkmal der Erfindung zwischen den Seitenteilen der Laufschiene und der Führungsschiene eine Aushebesicherung angeordnet. Diese Aushebesicherung mag vorteilhaft von aus den Abwinklungen der Seitenteile der Laufschiene aufragenden Leisten und an der Führungsschiene angeordneten Rillen gebildet sein, wobei die Leisten mit Spiel in die Rillen eingreifen.

Es ist darüberhinaus vorteilhaft, wenn die Seitenteile einer Laufschiene in ihrem hinteren Bereich eine Anschlußstelle für einen Sicherheitsgurt aufweisen. Diese Anschlußstelle mag von einem beide Seitenteile miteinander verbindenden, ein Befestigungsgewinde aufweisenden Zapfen gebildet sein, der aus einem Seitenteil ausragt und mit einer am Sitzteil befestigten Streblasche verbunden ist.

Die Erfindung ist in einem Ausführungsbeispiel auf der Zeichnung dargestellt und wird nachfolgend näher erläutert. Es zeigen:
- Fig. 1: die erfindungsgemäße Sitzschiene in einer Seitenansicht,
- Fig. 2: die aus Fig. 1 ersichtliche Sitzschiene auf einer Sitzlängsseite in einer teilweise im Schnitt aufgebrochenen Draufsicht,
- Fig. 3: die aus den Fig. 1 und 2 ersichtliche Sitzschiene in einem Querschnitt nach der Linie III - III von Fig. 1.

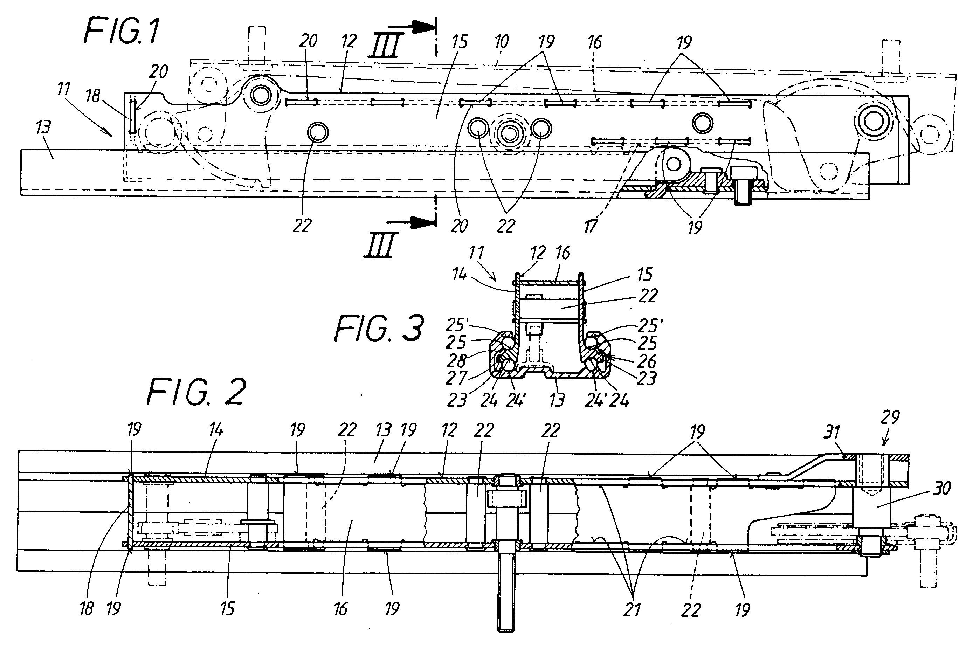

Von einem Kraftfahrzeugsitz ist in Fig. 1 nur der Längsholm 10 eines rahmenförmigen Sitzträgers dargestellt, der beispielsweise über eine Höhenverstelleinrichtung bekannter Art an der Laufschiene 12 einer auch eine Führungsschiene 13 umfassenden Sitzschiene 11 abgestützt ist. Die Laufschiene 12 besteht im wesentlichen aus zwei im Abstand zueinander angeordneten Seitenteilen 14 und 15, zwischen denen die Seitenteile auf Distanz haltende Lamellen 16, 17 und 18 angeordnet sind. Die Seitenteile 14 und 15 bilden zusammen mit den Lamellen 16 und 17 einen kastenartigen Querschnitt der Sitzschiene 11. Zur Lagesicherung der Lamellen 16 bis 18 an den Seitenteilen 14 und 15 sind die Lamellen an ihren Breitseiten mit im Abstand hintereinander angeordneten Vorsprüngen 19 versehen, die in Ausnehmungen 20 in den Seitenteilen 14 und 15 eingreifen, wobei diese Ausnehmungen im selben Abstand hintereinander in den Seitenteilen angeordnet sind wie die Vorsprünge 19 an den Lamellen 16 bis 18. Diese bei dem dargestellten Ausführungsbeispiel einen rechteckförmigen Querschnitt aufweisenden Vorsprünge 19 werden von zwischen diesen Vorsprüngen befindlichen Randausnehmungen 21 der Lamellen 16 bis 18 gebildet, wobei die Stirnflächen dieser Ausnehmungen an den Innenseiten der Seitenteile 14 und 15 anliegen, während die rechteckförmigen Vorsprünge 19 der Lamellen 16 bis 18 von den vorerwähnten Ausnehmungen 20 in den Seitenteilen 14 und 15 schließend umfaßt sind. Zur Sicherung und Aufrechterhaltung des Verbundes zwischen den Seitenteilen 14 und 15 einerseits und den Lamellen 16 bis 18 andererseits befinden sich zwischen den Seitenteilen 14 und 15 Stehbolzen 22, die mit abgesetzten Zapfen in diese umschließende Löcher in den Seitenteilen 14 und 15 eingreifen, wobei an die aus den Seitenteilen ausragenden Zapfenenden der Stehbolzen 22 Nietköpfe angeformt sind.

Die Seitenteile 14 und 15 weisen bei dem aus Fig. 3 ersichtlichen Ausführungsbeispiel unterseitig jeweils eine aus der Außenseite vorragende Abwinklung 23 auf, die jeweils oberseitig und unterseitig eine Kugellaufbahn 24 bzw. 25 aufweist, wobei diesen Kugellaufbahnen 24 und 25 diese ergänzende Kugellaufbahnen 24′ und 25′ der Führungsschiene 13 zugeordnet sind. Diese Führungsschiene 13 weist einen C-förmigen Querschnitt auf und umgreift mit ihrem C-förmigen Schenkel jeweils die Abwinklung 23 eines jeden Seitenteiles 14 bzw. 15. Dabei versteht es sich, daß zwischen den Kugellaufbahnen 24 und 24′ diese ausfüllende Kugeln angeordnet sind, wie dies auch zwischen den Kugellaufbahnen 25 und 25′ der Fall ist. Wie weiterhin aus Fig. 3 zu entnehmen ist, ist zwischen den Seitenteilen 14 bzw. 15 und der Führungsschiene 13 jeweils eine Aushebesicherung 26 angeordnet, die aus den Abwinklungen aufragenden Leisten 27 und aus an der Führungsschiene angeordneten Rillen 28 gebildet ist. Dabei versteht es sich, daß in Gebrauchslage zwischen den Konturen der Rillen 28 und Leisten 27 ein Spiel vorhanden ist.

Um das Schloß des Sicherheitsgurtes bei Verstellung des Sitzes mit der jeweiligen Sitzposition mitführen zu können, ist auf einer Seite einer Laufschiene 12 in deren hinterem Bereich eine Anschlußstelle 29 für den Sicherheitsgurt vorgesehen. Diese Anschlußstelle wird von einem beide Seitenteile miteinander verbindenden Zapfen 30 gebildet, der auf einer Seite einen nicht näher bezeichneten Zahnsegmenthebel der Sitzhöhenverstelleinrichtung lagert und auf der anderen Seite aus dem Seitenteil 14 der Laufschiene 12 ausragt und mit einer am Seitenteil 14 befestigten Streblasche 31 verbunden ist. An diesem mit der Streblasche verbundenen Ende weist der Zapfen 30 ein Befestigungsgewinde für das Gurtschloß des Sicherheitsgurtes auf.

Wie bereits erwähnt, gibt die vorbeschriebene Ausführungsform die Erfindung lediglich beispielsweise wieder, die keinesfalls allein darauf beschränkt ist. Es sind vielmehr noch mancherlei andere Ausführungen und Ausgestaltungen der Erfindung denkbar.

## Patentansprüche

1. Sitzschiene für Fahrzeugsitze, insbesondere Kraftfahrzeugsitze, die aus einer Führungsschiene (13) und einer daran verschiebbaren Laufschiene (12) besteht, wobei die Laufschiene (12) zwei auf Distanz zueinander angeordnete, gehäuseartig vereinigte, an der Führungsschiene (13) gleitend abgestützte Seitenteile (14, 15) aufweist,
**dadurch gekennzeichnet,**
daß die Seitenteile (14, 15) mit ihre Distanz voneinander überbrückenden Lamellen (16, 17, 18) auf Abstand gehalten sind, wobei die Seitenteile (14, 15) mittels Stehbolzen (22) mit ihren Innenseiten an die Lamellen (16, 17, 18) angedrückt und einen bereichsweise kastenartigen Querschnitt der Laufschiene (12) bildend fest miteinander verbunden sind.

2. Sitzschiene nach Anspruch 1, dadurch gekennzeichnet, daß die Lamellen (16, 17, 18) an ihren Breitseiten abstandsweise hintereinander Vorsprünge (19) aufweisen, die in Ausnehmungen (20) der Seitenteile (14, 15) justierend eingreifen.

3. Sitzschiene nach Anspruch 2, dadurch gekennzeichnet, daß die einen rechteckförmigen Querschnitt aufweisenden Vorsprünge (19) von Randausnehmungen (21) der Lamellen gebildet sind, die an den Innenseiten der Seitenteile (14, 15) anliegen, während die Vorsprünge (19) in rechteckförmige, im Abstand der Vorsprünge (19) in den Seitenteilen (14, 15) angeordnete Ausnehmungen (20) schließend eingreifen.

4. Sitzschiene nach einem oder mehreren der vorhergehenden Ansprüche, dadurch gekennzeichnet, daß die Seitenteile (14, 15) als Strangpreßprofile mit unterseitiger, Kugellaufbahnen (24, 25) aufweisender Abwinklung (23) ausgebildet sind.

5. Sitzschiene nach Anspruch 4, dadurch gekennzeichnet, daß den Kugellaufbahnen (24, 25) der Seitenteile (14, 15) der Laufschiene (12) Kugellaufbahnen (24′, 25′) der Führungsschiene (13) zugeordnet sind, die als Strangpreßprofil mit C-förmigem Querschnitt ausgebildet ist.

6. Sitzschiene nach einem oder mehreren der vorhergehenden Ansprüche, dadurch gekennzeichnet, daß zwischen den Seitenteilen (14, 15) der Laufschiene (12) und der Führungsschiene (13) eine Aushebesicherung (26) angeordnet ist.

7. Sitzschiene nach Anspruch 6, dadurch gekennzeichnet, daß die Aushebesicherung (26) von aus den Abwinklungen (23) der Seitenteile (14, 15) der Laufschiene (12) aufragenden Leisten (27) und an der Führungsschiene (13) angeordneten Rillen (28) gebildet ist, wobei die Leisten (27) mit Spiel in die Rillen (28) eingreifen.

8. Sitzschiene nach einem oder mehreren der vorhergehenden Ansprüche, dadurch gekennzeichnet, daß die Seitenteile (14, 15) einer Laufschiene (12) in ihrem hinteren Bereich eine Anschlußstelle (29) für einen Sicherheitsgurt aufweisen.

9. Sitzschiene nach Anspruch 8, dadurch gekennzeichnet, daß die Anschlußstelle (29) von einem beide Seitenteile (14, 15) miteinander verbindenden, ein Befestigungsgewinde aufweisenden Zapfen (30) gebildet ist, der aus einem Seitenteil (14) ausragt und mit einer am Seitenteil befestigten Streblasche (31) verbunden ist.

## Claims

1. A seat rail for vehicle seats, in particular motor vehicle seats, which seat rail consists of a guide rail (13) and a sliding rail (12) which is displaceable thereon, wherein the sliding rail (12) has two side members (14, 15) which are arranged at spacings apart and which are joined in the form of a housing and which rest slidingly on the guide rail (13)
characterised in that
the side members (14, 15) are held at spacings apart by plates (16, 17, 18) which bridge the distance between the side members, wherein the inner sides of the side members (14, 15) press by way of stay rods (22) against the plates (16, 17, 18), and are fixedly connected together so as to produce a regionally box-like cross-section of the sliding rail (12).

2. A seat rail according to Claim 1, characterised in that the wide sides of the plates (16, 17, 18) have projections (19) which are successively spaced apart and which adjust to engage in recesses (20) in the side members (14, 15).

3. A seat rail according to Claim 2, characterised in that projections (19) of rectangular cross-section are formed by peripheral recesses (21) in the plates bearing upon the insides of the side members (14, 15), whilst the projections (19) engage closingly in rectangular recesses (20) arranged in the side members (14, 15) at a spacing away from the projections (19).

4. A seat rail according to one or more of the preceding claims, characterised in that the side members (14, 15) are in the form of extruded profiles with a curved region (23) which has ball bearing races (24, 25) on the underside.

5. A seat rail according to Claim 4, characterised in that associated with the ball bearing races (24, 25) of the side members (14, 15) of the sliding rail (12) are ball bearing races (24', 25') of the guide rail (13) which is in the form of an extruded profile of C-shaped cross-section.

6. A seat rail according to one or more of the preceding claims, characterised in that arranged between the side members (14, 15) of the sliding rail (12) and the guide rail (13) is an anti-release safety device (26).

7. A seat rail according to Claim 6, characterised in that the anti-release safety device (26) is in the form of bars (27) which project from the bent regions (23) of the side members (14, 15) of the sliding rail (12) and by grooves (28) arranged on the guide rail (13), wherein the bars (27) engage with play into the grooves.

8. A seat rail according to one or more of the preceding claims, characterised in that the side members (14, 15) of a sliding rail (12) have an attachment location (29) in their rear region for a safety belt.

9. A seat rail according to Claim 8, characterised in that the attachment location (29) is formed by a journal (30) which has a fixture screwthread and which connects two side members (14, 15) together, the journal projecting from one side member (14) and being connected to a fixture plate (31) fixed to the side member.

## Revendications

1. Glissière pour siège de véhicule, en particulier siège de véhicule automobile, qui se compose d'un rail de guidage (13) et d'un rail mobile (12) apte à coulisser sur celui-ci, le rail mobile (12) comportant deux parties latérales (14, 15), espacées l'une de l'autre, réunies à la manière d'un caisson et en appui glissant sur le rail de guidage (13), caractérisée en ce que les parties latérales (14, 15) sont maintenues espacées par des lamelles (16, 17, 18) chevauchant l'intervalle d'espacement, et en ce que les parties latérales (14, 15) sont appliquées sur les lamelles (16, 17, 18) par leurs faces intérieures au moyen de tirants (22) et sont rigidement reliées l'une à l'autre en formant localement une section en caisson du rail mobile (12).

2. Glissière pour siège selon la revendication 1, caractérisée en ce que les lamelles (16, 17, 18) comportent sur leurs faces larges des parties en saillie (19) disposées les unes à la suite des autres et espacées et, qui s'engagent sans jeu dans des découpes (20) des faces latérales (14, 15).

3. Glissière pour siège selon la revendication 2, caractérisée en ce que des parties en saillie (19) présentant une section rectangulaire sont formées par des encoches (21) du bord des lamelles, qui sont en appui sur les faces intérieures des parties latérales (14, 15), tandis que les parties en saillie (19) sont serties dans des ouvertures rectangulaires (20) ménagées dans les parties latérales (14, 15), à l'écartement des parties en saillie (19).

4. Glissière pour siège selon l'une ou plusieurs des revendications précédentes, caractérisée en ce que les parties latérales (14, 15) sont formées de profilés étirés avec un rebord en aile (23) présentant des chemins de roulement de billes (24, 25) inférieurs.

5. Glissière pour siège selon la revendication 4, caractérisée en ce qu'aux chemins de roulement de billes (24, 25) des parties latérales (14, 15) du rail mobile (12) sont associés des chemins de roulement de billes (24', 25') du rail de guidage (13), qui sont formés par des profilés étirés à section en forme de C.

6. Glissière pour siège selon l'une ou plusieurs des revendications précédentes, caractérisée en ce qu'entre les parties latérales (14, 15) du rail mobile (12) et le rail de guidage (13) est prévue une sécurité contre le soulèvement (26).

7. Glissière pour siège selon la revendication 6, caractérisée en ce que la sécurité contre le soulèvement (26) est formée par les nervures (27) dépassant des rebords en aile (23) des parties latérales (14, 15) du rail mobile (12) et par les rainures (28) prévues sur le rail de guidage (13), les nervures (27) s'engageant avec du jeu dans les rainures (28).

8. Glissière pour siège selon l'une ou plusieurs des revendications précédentes, caractérisée en ce que les parties latérales (14, 15) d'un rail mobile (12) comportent dans leur région arrière un emplacement de fixation (29) pour une ceinture de sécurité.

9. Glissière pour siège selon la revendication 8, caractérisée en ce que l'emplacement de fixation (29) est formé par une broche (30) présentant un filetage de fixation et reliant entre elles les deux parties latérales, broche qui dépasse de l'une (14) des parties latérales et qui est reliée à une patte de renforcement (31) fixée à cette partie latérale.
